# DEMANDE DE BREVET EUROPEEN

(11) **EP 0 738 770 A1**
(43) Date de publication de la demande: **23.10.1996**
(21) Numéro de dépôt: 95870036.1
(22) Date de dépôt: 18.04.1995
(51) Int. Cl.: C09K 3/10, F16J 15/10, C08K 7/10, C08L 21/00

(54) **Matière pour joints industriels et procédé de fabrication**

(71) Demandeur: COMPAGNIE ROYALE ASTURIENNE DES MINES, SOCIETE ANONYME, B-1050 Bruxelles (BE)
(72) Inventeur: Jacques, Alain, B-5100 Jambes (BE)
(74) Mandataire: Van Malderen, Joelle

(57) **Abrégé**

Matériau flexible se présentant sous forme de feuille, destiné à la fabrication de joints industriels, constitué essentiellement de 80 à 90 % en poids de paillettes de mica et de 10 à 20 % d'un élastomère ou caoutchouc synthétique, à l'exception de toute fibre cellulose.

## Description

### Objet de l'invention.

La présente invention se rapporte à une matière destinée à être utilisée pour la fabrication de joints industriels et en particulier de joints d'étanchéité pour des assemblages boulonnés, tels que des joints de bride, ainsi qu'à son procédé de fabrication.

La présente invention se rapporte également au produit obtenu, qui est constitué par le joint industriel d'étanchéité.

### Etat de la technique à la base de la présente invention.

Les joints industriels sont en général constitués d'un matériau qui doit présenter des bonnes caractéristiques mécaniques, et en particulier une bonne étanchéité, ainsi que des bonnes caractéristiques de tenue thermique.

Dans ce but, on a utilisé pendant de nombreuses années des fibres d'amiante combinées à un élastomère afin de créer de tels joints industriels.

Etant donné les problèmes que pose l'utilisation des fibres d'amiante, on a tenté depuis quelques années de trouver des produits de substitution, tels que le téflon, les fibres aramides ou le graphite.

Dans le cas de l'utilisation de téflon pour la réalisation de joints industriels, on observe une moins bonne résistance à la température (température limitée à 250 °C), et une moins bonne résistance mécanique.

Dans le cas de l'utilisation de fibres aramides, on observe une amélioration du comportement à la température, qui est toutefois limitée à des températures inférieures à 350 °C, et une amélioration du comportement d'un point de vue mécanique. Néanmoins, il convient de noter que ces fibres sont particulièrement onéreuses, et que l'utilisation de telles fibres augmente de manière non négligeable les coûts de production de joints industriels.

On a également proposé l'utilisation du graphite, qui présente une bonne tenue en température (400 à 450 °C) mais qui, ne se présentant pas sous forme de fibres, conduit à une mise en oeuvre plus délicate.

En particulier, le document EP-A-0109209 décrit la réalisation de joints industriels à partir d'une matière flexible se présentant sous forme d'une feuille et contenant de l'argile figuline, du mica et du graphite, des fibres de cellulose ainsi qu'un caoutchouc synthétique et de l'amidon. Il convient de noter que dans ce cas, le mica est uniquement proposé comme charge afin d'améliorer les caractéristiques générales d'une tenue thermique.

Le document FR-A-2439812 décrit également une matière destinée à la fabrication de joints industriels, constituée principalement de mica et de fibres de cellulose. A nouveau, la cohésion est donnée par la présence des fibres de cellulose, et le mica n'est cité qu'à titre de charge.

Le document EP-A-0043679 décrit un matériau flexible se présentant sous forme de feuille, exempt d'amiante, et qui contient de la chlorite, des fibres organiques telles que de la cellulose ainsi qu'un élastomère (NBR).

Ainsi que déjà mentionné, on observe que tous ces documents décrivent une matière comprenant un pourcentage élevé de fibres cellulose. Il est bien entendu que la présence de ces fibres limite en particulier la tenue des différents matériaux à haute température.

### But de l'invention.

La présente invention vise à proposer un produit de substitution aux produits réalisés à base de fibres d'amiante, présentant au moins une aussi bonne tenue en température et éventuellement une tenue en température améliorée, ainsi que des caractéristiques mécaniques comparables ou supérieures à celles des produits constitués de fibres d'amiante.

La présente invention vise également à proposer un matériau qui ne soit pas trop onéreux et d'une mise en oeuvre relativement simple.

### Principaux éléments caractéristiques de la présente invention.

La présente invention se rapporte à un matériau flexible se présentant sous forme de feuille, destiné à la fabrication de joints industriels, constitué essentiellement de 80 à 90 % en poids de paillettes de mica et de 10 à 20 % d'un élastomère ou caoutchouc synthétique à l'exception de toutes autres fibres cellulose.

De préférence, le matériau comprend encore un faible pourcentage de fibres autres que les fibres cellulose et de préférence inférieur à 5 %, de manière à faciliter la formation de la feuille sur une machine à papier traditionnelle.

Selon une forme d'exécution préférée, on introduit également un agent de couplage ou promoteur d'adhésion qui est de préférence constitué par les silanes organofonctionnels, les titanates, ... .

On a observé qu'un joint industriel constitué à partir d'un matériau selon la présente invention présentait non seulement des caractéristiques d'étanchéité acceptables (présence de l'élastomère), des caractéristiques de tenue thermique (présence du mica, absence de fibres cellulose), ainsi que de manière surprenante, des caractéristiques de résistance mécanique suffisantes (présence de paillettes donnant la cohésion au matériau, et éventuellement présence des silanes).

Selon la présente invention, ce sont essentiellement les paillettes de mica qui permettront la formation de la feuille. Ces paillettes présentent une granulométrie comprise en 50 et 5000 microns. Elles peuvent être constituées de muscovite ou de phlogopite ou d'un mélange de celles-ci. Elles seront de préférence traitées avec un agent de couplage.

Pour ce qui concerne l'élastomère ou le caoutchouc synthétique, il peut être constitué d'un élastomère NBR ou SBR, d'un acrylique ou d'un élastomère équivalent qui se présente sous forme d'une dispersion aqueuse (latex)

Cet élastomère sert de liant et permet d'obtenir des caractéristiques d'étanchéité acceptables du joint industriel.

Les fibres utilisées, qui sont de préférence des fibres organiques de type aramides, des fibres minérales comme des fibres de laine de roche, visent uniquement à améliorer la "machinabilité" du papier, c'est-à-dire visent à faciliter la formation de la feuille sur une machine à papier traditionnelle. Ces fibres sont choisies en vue de conserver les bonnes propriétés du matériau fini, et de ce fait, les fibres de cellulose sont exclues.

L'agent de couplage ou promoteur d'adhésion entre les paillettes de mica et l'élastomère, a pour but d'améliorer encore les propriétés mécaniques du matériau aussi bien à froid qu'à chaud. Habituellement, cet agent est constitué par des silanes organofonctionnels tels que les amino-silanes, des titanates ou similaires.

En particulier, dans le cas où on utilise un élastomère NBR, on utilisera des amino-silanes comme agent de couplage.

La présente invention caractérise également un procédé de fabrication d'un tel matériau, qui comprend les étapes suivantes :
- on mélange les paillettes de mica dans de l'eau;
- on ajoute sous agitation les fibres autres que les fibres cellulose;
- on ajoute l'élastomère sous forme de latex (dispersion aqueuse sous agitation), le pH de la solution étant maintenu aux environs de 7 ou 8;
- on ajoute ensuite une certaine quantité de sulfate d'aluminium afin de diminuer le pH jusqu'à une valeur d'environ 4. Ce changement de pH déstabilise la dispersion élastomère dans l'eau, ce qui entraîne une précipitation des fines particules d'élastomère sur les paillettes de mica, la solution aqueuse surnageant devenant claire et limpide, ce qui prouve que tout l'élastomère a précipité;
- on prélève le précipité constitué de fine particules d'élastomère sur les paillettes de mica qui se présentent sous forme de pulpe et avec lequel on alimente une machine à papier traditionnelle afin de former un papier composé de paillettes de mica et d'élastomère;
- on presse à chaud ce papier ainsi formé tel quel ou éventuellement après superposition de plusieurs couches;
- on découpe le matériau fini aux dimensions du joint désire.

Selon une forme d'exécution préférée, on ajoute également un agent de couplage ou promoteur d'adhésion aux paillettes de mica avant l'ajout des fibres et du latex constituant l'élastomère.

### Description détaillée de plusieurs formes d'exécution de l'invention.

La présente invention sera décrite plus en détails à l'aide des exemples qui suivent.

### Exemple 1.

- On mélange dans une cuve de 2000 litres 39,1 kg de paillettes de mica obtenues par désintégration des scraps de mica sous jets d'eau à haute pression et 1500 litres d'eau.
- On ajoute sous agitation 2,3 kg de fibres para-aramides sous forme de pulpe.
- On ajoute sous agitation 10,9 litres d'un latex NBR, ce qui correspond à 10 % en poids sec du mélange ainsi constitué. Le latex est dans ce cas-ci une dispersion aqueuse d'un copolymère acrylonitrile-butadiène non modifié à teneur moyenne en ACN à 42 % de matières solides et de pH 10,4.
- On maintient l'agitation pendant un temps suffisant permettant d'obtenir un mélange homogène, le pH de cette solution se situant aux environs de 7 ou 8.
- On incorpore sous agitation et progressivement environ 15 titres d'une solution à 5 % en poids de sulfate d'alumine afin de modifier le pH et de faire précipiter les particules d'élastomère sur les paillettes de mica. On arrête l'ajout de sulfate lorsque la solution surnageant devient limpide, ce qui signifie qu'il n'y a plus d'élastomère en dispersion. Cette étape correspond à un pH d'environ 4.
- Avec la pulpe obtenue à partie de la précipitation des particules d'élastomère sur les paillettes de mica, on alimente une machine à papier classique et on réalise une feuille constituée de paillettes de mica et d'élastomère qui, après séchage, est enroulée sur un mandrin. On peut obtenir le grammage désiré de cette feuille de papier en effectuant divers réglages sur la machine. Dans le présent cas, le grammage se situe aux environs de 600 g/m².
- On presse ensuite à chaud plusieurs feuilles superposées en fonction de l'épaisseur finale désirée. A titre d'exemple, on peut superposer 5 feuilles de papier d'un grammage de 600 g/m² pressées à 150 °C sous 100 bars pendant 60 minutes, ce qui donnera un produit fini de 1,5 mm d'épaisseur.

Les caractéristiques du produit fini obtenu selon l'exemple d'exécution décrit ci-dessus sont les suivantes :
- teneur en paillettes de mica : 85 %
- teneur en fibres aramides : 5 %
- teneur en élastomère NBR : 10 %
- grammage : 3043 g/m²
- épaisseur : 1,5 mm
- densité : 2,03
- compressibilité (ASTM F 36 - A) : 11,4 %
- reprise élastique (ASTM F 36 - A) : 60,6 %
- résistance à la traction (DIN 52910) : 12,5 N/mm²
- relaxation de contrainte à 300 °C et 50 Mpa (DIN 52913) : 40 N/mm²
- fuite d'étanchéité (à 350 °C sous 30 Mpa de pression de serrage et sous 40 bars de pression interne d'hélium) : 0,08 µg/s.m

### Exemple 2.

Selon une variante d'exécution, on peut augmenter le taux d'élastomère jusqu'à 20 % en poids du mélange. Dans ce cas, les propriétés mécaniques à froid ne sont pas modifiées, tandis que les propriétés mécaniques à chaud se dégradent. En particulier, on observe une relaxation de contrainte à 300 °C qui diminue jusqu'à 10 N/mm² pour cette teneur. Par contre, l'étanchéité s'améliore.

### Exemple 3.

Selon cette variante d'exécution, on introduit un agent de couplage de type silane dans le procédé de fabrication. Ce procédé de fabrication est essentiellement comparable à celui précédemment décrit à l'exemple 1, sauf que, avant d'ajouter le latex sous forme de dispersion aqueuse comprenant l'élastomère, on procède à l'étape suivante :
- on ajoute sous agitation aux paillettes de mica dans l'eau 391 litres d'une solution aqueuse de silane à 0,1 %, c'est-à-dire 1 % en poids sec de silane par rapport au mélange constitué par le mica et le silane. Un exemple de silane utilisé peut être le silane DAMO, qui est constitué de N-aminoéthyl-3-aminopropyltriméthoxysilane;
- on procède ensuite aux diverses étapes successives telles que décrites dans l'exemple 1 par l'ajout du latex.

Dans ce cas, les caractéristiques du produit fini sont les suivantes :
- teneur en paillettes de mica : 85 %
- teneur en fibres aramides : 5 %
- teneur en élastomère NBR : 10 %
- grammage : 3050 g/m²
- épaisseur : 1,5 mm
- densité : 2,03
- compressibilité (ASTM F 36 - A) : 7,8 %
- reprise élastique (ASTM F 36 - A) : 74,2 %
- résistance à la traction (DIN 52910) : 26,5 N/mm²
- relaxation de contrainte à 300 °C et 50 Mpa (DIN 52913) : 45 N/mm²

On observe que l'introduction du silane permet de diminuer la compressibilité et d'augmenter la reprise élastique, qui sont des caractéristiques favorables et importantes pour un joint, ainsi que de doubler au minimum la résistance à la traction, ce qui favorise la manipulation du produit et sa mise en oeuvre.

L'utilisation d'un tel agent de couplage permet également d'augmenter le taux d'élastomère tout en gardant de bonnes propriétés mécaniques à chaud, ce qui permet d'augmenter en pratique l'étanchéité à chaud du joint industriel.

## Revendications

1. Matériau flexible se présentant sous forme de feuille, destiné à la fabrication de joints industriels, constitué essentiellement de 80 à 90 % en poids de paillettes de mica et de 10 à 20 % d'un élastomère ou caoutchouc synthétique, à l'exception de toute fibre cellulose.

2. Matériau selon la revendication 1, caractérisé en ce qu'il comprend également un faible pourcentage, et de préférence inférieur à 5 %, de fibres présentant une bonne résistance thermique, telles que des fibres organiques de type aramides, ou des fibres minérales du type laine de roche.

3. Matériau selon la revendication 1 ou 2, caractérisé en ce qu'il comprend également un agent de couplage ou promoteur d'adhésion, qui est constitué par des silanes organofonctionnels, des titanates ou similaires.

4. Matériau selon l'une quelconque des revendications précédentes, caractérisé en ce que les paillettes de mica présentent une granulométrie comprise entre 50 et 5000 microns, celle-ci étant constituées de muscovite ou de phlogopite ou d'un mélange de celles-ci.

5. Matériau selon l'une quelconque des revendications précédentes, caractérisé en ce que l'élastomère ou le caoutchouc synthétique est constitué d'un élastomère NBR, SBR ou d'un acrylique ou tout autre élastomère se présentant sous forme de dispersion aqueuse.

6. Procédé de fabrication d'un matériau selon l'une quelconque des revendications précédentes, caractérisé en ce qu'il comprend les étapes suivantes :
- on mélange les paillettes de mica dans de l'eau;
- on ajoute sous agitation les fibres autres que les fibres cellulose;
- on ajoute l'élastomère sous forme de latex (dispersion aqueuse sous agitation), le pH de la solution étant maintenu aux environs de 7 ou 8;
- on ajoute ensuite une certaine quantité de sulfate d'aluminium afin de diminuer le pH jusqu'à une valeur comprise entre 4 et 5. Ce changement de pH déstabilise la dispersion élastomère dans l'eau, ce qui entraîne une précipitation des fines particules d'élastomère sur les paillettes de mica, la solution aqueuse surnageant devenant claire et limpide, ce qui prouve que tout l'élastomère a précipité;
- on prélève le précipité constitué de fine particules d'élastomère sur les paillettes de mica qui se présentent sous forme de pulpe et avec lequel on alimente une machine à papier traditionnelle afin de former un papier composé de paillettes de mica et d'élastomère;
- on presse à chaud ce papier ainsi formé tel quel ou éventuellement après superposition de plusieurs couches;
- on découpe le matériau fini aux dimensions du joint désire.

7. Procédé selon la revendication 5, caractérisé en ce que l'on ajoute un agent de couplage ou promoteur d'adhésion aux paillettes de mica avant l'ajout du latex constituant l'élastomère.

8. Utilisation du matériau selon l'une quelconque des revendications 1 à 4 pour des joints industriels, et en particulier des joints d'étanchéité pour des assemblages boulonnés tels que des joints de bride.

## Revendications modifiées

### Revendications modifiées conformément à la règle 86(2) CBE.

1. Matériau flexible se présentant sous forme de feuille, destiné à la fabrication de joints industriels, constitué essentiellement de 80 à 90 % en poids de paillettes de mica et de 10 à 20 % d'un élastomère ou caoutchouc synthétique, à l'exception de toute fibre de cellulose, ainsi qu'un agent de couplage ou promoteur d'adhésion qui est constitué par des silanes organofonctionnels, des titanates ou similaires.
2. Matériau selon la revendication 1, caractérisé en ce qu'il comprend également un faible pourcentage, et de préférence inférieur à 5 %, de fibres présentant une bonne résistance thermique, telles que dans fibres organiques de type aramides, ou des fibres minérales du type laine de roche.
3. Matériau selon l'une quelconque des revendications précédentes, caractérisé en ce que les paillettes de mica présentent une granulométrie comprise entre 50 et 5000 microns, celle-ci étant constituées de muscovite ou de phlogopite ou d'un mélange de celles-ci.
4. Matériau selon l'une quelconque des revendications précédentes, caractérisé en ce que l'élastomère ou le caoutchouc synthétique est constitué d'un élastomère NBR, SBR ou d'un acrylique ou tout autre élastomère se présentant sous forme de dispersion aqueuse.
5. Procédé de fabrication d'un matériau selon l'une quelconque des revendications précédentes, caractérisé en ce qu'il comprend les étapes suivantes :
- on mélange les paillettes de mica dans de l'eau;
- on ajoute sous agitation les fibres autres que les fibres cellulose;
- on ajoute l'élastomère sous forme de latex (dispersion aqueuse sous agitation), le pH de la solution étant maintenu aux environs de 7 ou 8;
- on ajoute ensuite une certaine quantité de sulfate d'aluminium afin de diminuer le pH jusqu'à une valeur comprise entre 4 et 5. Ce changement de pH déstabilise la dispersion élastomère dans l'eau, ce qui entraîne une précipitation des fines particules d'élastomère sur les paillettes de mica, la solution aqueuse surnageant devenant claire et limpide, ce qui prouve que tout l'élastomère a précipité;
- on prélève le précipité constitué de fine particules d'élastomère sur les paillettes de mica qui se présentent sous forme de pulpe et avec lequel on alimente une machine à papier traditionnelle afin de former un papier composé de paillettes de mica et d'élastomère;
- on presse à chaud ce papier ainsi formé tel quel ou éventuellement après superposition de plusieurs couches;
- on découpe le matériau fini aux dimensions du joint désiré.
6. Procédé selon la revendication 5, caractérisé en ce que l'on ajoute un agent de couplage ou promoteur d'adhésion aux paillettes de mica avant l'ajout du latex constituant l'élastomère.
7. Utilisation du matériau selon l'une quelconque des revendications l à 4 pour des joints industriels, et en particulier des joints d'étanchéité pour des assemblages boulonnés tels que des joints de bride.
